(19) Europäisches Patentamt / European Patent Office / Office européen des brevets

(11) **EP 2 369 305 A1**

(12) **EUROPEAN PATENT APPLICATION**

(43) Date of publication:
**28.09.2011 Bulletin 2011/39**

(51) Int Cl.:
*G01F 1/66* (2006.01)     *G01F 1/74* (2006.01)

(21) Application number: **10157579.3**

(22) Date of filing: **24.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Kamstrup A/S**
**8660 Skanderborg (DK)**

(72) Inventor: **Sorensen, Jens Lykke**
**DK-8330, Beder (DK)**

(74) Representative: **Plougmann & Vingtoft A/S**
**Sundkrogsgade 9**
**P.O. Box 831**
**2100 Copenhagen Ø (DK)**

(54) **Ultrasonic flow meter unit for detecting mixing ratio of liquid components**

(57)    The present invention discloses an ultrasonic flow meter unit for detecting the mixing ratio of liquid components in a flowing liquid. The ultrasonic flow meter unit is arranged to measure a flow rate of a known liquid of two or more components. The flow meter unit is arranged to determine the speed of sound of the liquid and the temperature of the liquid, and based on a known relationship between a mixing ratio of the two or more components of the known liquid, the speed of sound and the temperature, the mixing ratio is determined. The ultrasonic flow meter unit may in embodiments be implemented in a flow meter, e.g. in the form of a consumption meter.

FIG. 1

EP 2 369 305 A1

## Description

FIELD OF THE INVENTION

The present invention relates to an ultrasonic flow meter unit for ultrasonic measurements of liquid flow. In particular the invention relates to an ultrasonic flow meter unit, to an ultrasonic flow meter and to a method of operating an ultrasonic flow meter unit with a liquid comprising two or more liquid components.

BACKGROUND OF THE INVENTION

In many domestic and industrial applications there is a need for measuring volumes, flow velocities, energy dissipation etc. of liquid media. Often the liquid of interest is water with functional additives aimed at changing the physical properties of the water. For instance, in distributed heating systems, anti-corrosion agents are added to prolong the lifespan of the installation. In cooling systems anti-freeze agents are added to lower the freezing point of water. Also, in some areas anti-calcification agents are added to the drinking water for the benefit of valves, meters and other components of the distribution system.

For ultrasonic flow meters the additives can pose a problem since they affect both the speed of sound and the viscosity of the liquid of interest. As a result, the meter must be calibrated in accordance with a specific mixing ratio of the flowing liquid to give a correct reading of the liquid volume passing through. This calibration is specific to the specific mixing ratio, i.e. to the particular agents added to the liquid as well as to the particular concentration of the agents. In many practical applications detailed knowledge of the concentration of the additive is rare. Hence, the calibration of the flow meter and consequently its reading will be inaccurate. When considering consumption flow meters for charging purposes this is problematic.

External equipment may be used to pre-determine a mixing ratio of e.g. anti-freeze agents in a water based flow system. In every flow system there is a need for refilling liquid due to losses in the system. This alters the pre-determined mixing ratio and cause measuring errors. As a consequence regular measurements of the mixing ratio are necessary to ensure reliable metering. Alternatively, the mixing ratio can be made a programmable internal parameter in the flow meter, which must be adjusted regularly to accommodate changes. However, changing the parameter settings should not be made public accessible since fraudulent misuse is then possible. Having authorized persons setting the parameter in all flow meters in a distributed system adds extra operation costs.

SUMMARY OF THE INVENTION

It is an object of the invention to provide a flow meter unit suitable for liquid flow measurements which can be used to accurately determine a consumed quantity of a flowing liquid over a prolonged operation time, and/or which in a cost-efficient way seeks to minimize, or even eliminate, manual adjustments related to changes in the liquid constituents. In general, it may be seen as an object of the present invention to provide a flow meter unit that solves the above mentioned problems, or other problems, of the prior art.

Accordingly, in a first aspect of the invention, there is provided an ultrasonic flow meter unit arranged to measure a flow rate of a known liquid of two or more components, the flow meter unit comprises:

- at least two ultrasonic transducers arranged for transmission and receipt of ultrasonic signals in opposite directions across a measuring section, the measuring section being arranged to receive the liquid of two of more components;
- an electronic circuit for operating the flow meter unit, the electronic circuit comprising a processing circuit; and
- a temperature probe arranged for determining a temperature of the liquid in the measuring section;

wherein the electronic circuit is operated to determine a speed of sound of the liquid in the measuring section; and wherein the processing circuit is capable of accessing a known relationship between a mixing ratio of the two or more components, the speed of sound of the liquid and the temperature of the liquid, and based on the relationship to determine the mixing ratio of the two or more components of the liquid.

Embodiments of the present invention thus provides an ultrasonic flow meter unit in which the mixing ratio of a known set of fluid components can be inferred internally based on measurements of temperature and the speed of sound of the propagating signals in the liquid. Once the mixing ratio is inferred, correct values of important parameters such as the specific heat, viscosity etc. of the liquid, can be assigned and the correct flow and energy dissipation can be calculated. By providing a flow meter unit with the capability to automatically inferring the mixing ratio of known constituents to the liquid, no external interference is required to select the appropriate correction factor and/or specific heat.

In connection with the present invention, the term mixing ratio should be construed broadly to define any suitable means for determining the distribution of components or constituent of the liquid. For example the mixing ratio may be expressed in terms of volume fractions, mass fractions, or by any other suitable means.

The flow meter unit may be part of a flow meter for measuring a flow rate of a known liquid. In addition to the flow meter unit, the flow meter comprises a housing with a flow passage for receiving the flowing liquid. The measuring section is arranged inside the flow passage, so that the ultrasonic flow meter unit, in accordance with embodiments of the invention, is arranged in relation to the housing to allow ultrasonic signal to travel between the at least two ultrasonic transducers through the liquid in the measuring section.

The flow meter may be a consumption meter for measuring a consumed quantity of the fluid, such as a consumed quantity of hot or cold water, a consumed quantity of energy carried by a liquid, a consumed quantity of liquid for heating or cooling of buildings, etc. In general, the consumption of any liquid medium measurable with a consumption meter in accordance with embodiments of the present invention can be measured. The consumption meter may be a legal meter, i.e. a meter which is subdued to regulatory demands. Such regulatory demands may be demands to the precision of the measurements.

In general, embodiments of the present invention may improve flow meter units operating on any liquid flow where, at least in the relevant ranges of mixing ratios, temperature and speed of sound there exists an unambiguous correlation, such as a monotone relationship, between the speed of sound, the temperature and the mixing ratio. For a large number of liquids such relationships exist for specified relevant ranges.

Of particular interest are mixtures of water and various functional additives, such as additive selected from the group consisting of: an anti-freeze agent, an anti-corrosion agent, an anti-calcification agent or an anti-friction agent.

In embodiments, the anti-freeze agent may be selected among any one of the substances of the following list, taken singly or in any combination: Ethylene-Glycol, Propylene-Glycol, Glycerol, Methanol, Ethanol, Propanol, Isopropanol, Sodium Chloride, Potassium Chloride and Calcium Chloride.

In embodiments, the anti-corrosion agent may be selected among any one of the substances of the following list, taken singly or in any combination: Sodium Hydroxide and Ammonia.

In embodiments, the anti-corrosion agent may be selected among any one of the substances of the following list, taken singly or in any combination: Sodium Carbonate, Sodium Sulphates, Sulfonic acid and Alkylbenzene Sulfonic acid.

In embodiments, the anti-corrosion agent may be selected among any one of the substances of the following list, taken singly or in any combination: Tensides, Sulfonic acid and Alkylbenzene Sulfonic acid.

While the above lists disclose advantageous additive substances. The invention is not limited to the above listed substances instead any suitable additive within the scope of the invention may be used.

In a second aspect of the invention, the invention is directed to a method of operating an ultrasonic flow meter unit of the first aspect. The method comprises:

- operate the ultrasonic transducers to generate ultrasonic signals propagating through the liquid flow in the measuring section and based on the ultrasonic signals, determine a speed of sound of the liquid in the measuring section;

- determine the temperature of the liquid in the flow passage; and

- access a known relationship between a mixing ratio of the two or more components, the speed of sound of the liquid and the temperature of the liquid, and based on the relationship determine the mixing ratio of the two or more components of the liquid.

In general the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE FIGURES

Embodiments of the invention will be described, by way of example only, with reference to the drawings, in which

FIG. 1 schematically illustrates an ultrasonic flow meter;

FIG. 2 shows a 3D plot of the liquid mixture of water and ethylene-glycol in terms of the speed of sound, the temperature and the volume fraction of ethylene-glycol;

FIG. 3 shows a 2D plane projection of the plot of FIG. 2; and

FIG. 4 illustrates a flow chart of embodiments of operating an ultrasonic flow meter in accordance with embodiments of the present invention.

DESCRIPTION OF EMBODIMENTS

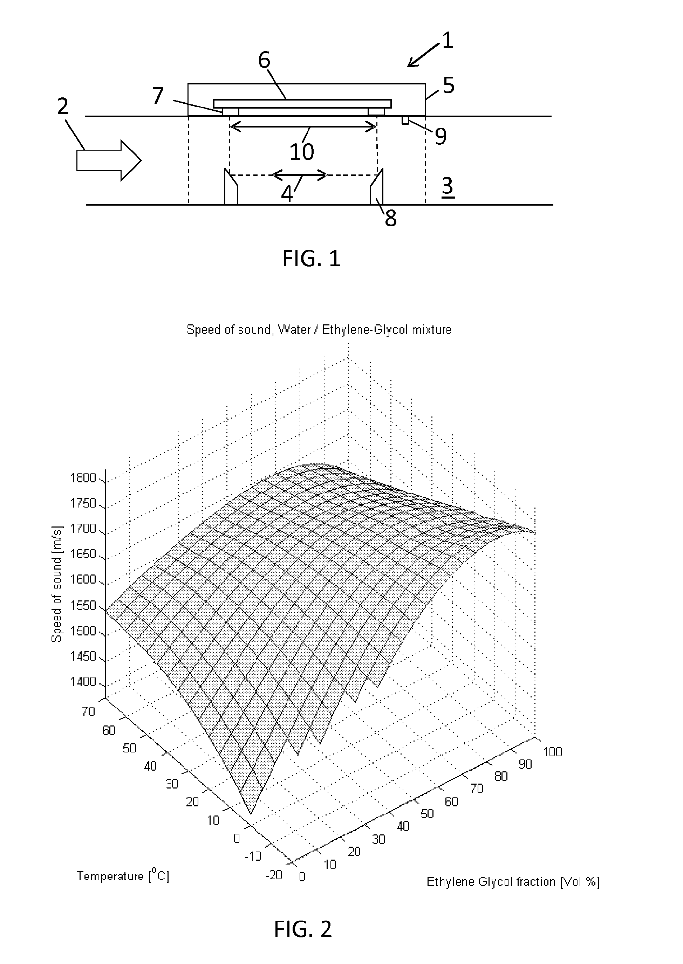

FIG. 1 schematically illustrates an example of an ultrasonic flow meter 1 for determining a consumed flow 2, or a value representing a consumed flow, of a liquid flowing in a flow passage 3, typically in the form of a measuring tube. The figure schematically illustrates the flow meter 1 mounted in the measuring tube 3 of the type where the ultrasonic signals 4 are propagating in a measuring section 10 in a parallel manner with respect to the flow 2. Generally, embodiments of the invention are not limited to this type of flow meters. Examples of other types of flow meters include, but are not limited to such flow meters of the type where the transducers are oppositely mounted in flanges of the measuring tube with ultrasonic signals propagating at an angle with respect to the flow, to such flow meters where more than two reflectors or reflecting areas are used, etc.

The flow meter 1 comprises a housing 5 encapsulating the electronic circuitry 6. The electronic circuitry 6 is in electrical connection with the two transducers 7 emitting and detecting oppositely propagating ultrasonic signals 4. The ultrasonic signals 4 are directed by use of protruding mirrors 8. The electronic circuitry generally comprises any suitable means for controlling components of the flow meter as well as for determining and outputting measured quantities, such as operational quantities as well as a consumed volume quantity. The electronic circuitry comprises two or more processing circuits either in the form of a single processor or distributed over two or more processing units. The electronic circuitry may be implemented on a PCB.

The flow meter further comprises or is connected to additional components, such as a temperature probe 9. In embodiments a pair of temperature probes is used, one probe for measuring the temperature of the liquid of the inflow to the installation and one probe for measuring the temperature of the liquid of the outflow of the installation. From the temperature difference a consumed energy quantity can be calculated. The liquid medium may typically be water or water with additives. However the flow of other types of liquid may also be determined by use of a flow meter in accordance with embodiments of the present invention.

In an embodiment, the flow meter is based on a flow meter unit which may be provided separately and connected to the housing comprising the flow passage. The flow meter unit comprises the ultrasonic transducers 7, the electronic circuit 6 and the temperature probe 9.

The flow meter is using the ultrasonic time-of-flight principle, where two piezoelectrical transducers are connected acoustically via the liquid for which the flow velocity is to be determined. Two pulses of acoustic energy are fired: one travelling upstream and another travelling downstream relative to the flowing liquid. By clocking the time-of-flight for the two pulses, the flow velocity v can be derived as:

$$v = \frac{c^2}{2L}\Delta t$$

where c is the speed of sound in the liquid, *L* is the distance through the liquid separating the two transducers and $\Delta t$ is the time difference between the arrival of the two acoustic pulses. From the above equation it can be seen that the speed of sound should be well known to derive the flow velocity, and hence the consumed volume, with appreciable accuracy. Moreover, in an ultrasonic flow meter the viscosity of the liquid must be known as well, since not the entire cross section of the flow is probed. Hence, the measured flow is depending on the cross sectional distribution of flow velocities, which again is depending on the liquid viscosity $\mu$ and the average flow velocity. Since the flow is only probed in a fraction of the cross-sectional area of the flow passage, a correction factor is applied to the measured flow to correct for the flow profile across the cross-sectional area of the flow passage.

The correction factor may be applied to the flow meter measurement for each combination of flow velocity and mixing ratio of the liquid. For a liquid which is a binary, ternary or a more complicated mixture of substances, the correction factor must take into account the various mixing ratios, $x_i$, of the n constituents, $i \in \{1,..,n\}$. Hence, the correction factor becomes dependent on more parameters, $K(v, x_1,...,x_n)$, all of which must be known in order to ensure precise flow measuring.

If the flow meter is part of an energy meter, attention must also be paid to the specific heat C of the liquid mixture, since this quantity also changes with varying mixing ratios and temperature, $C(T, x_1,...,x_n)$.

Embodiments of the present invention provide a flow meter with the capability to automatically infer the mixing ratio of known constituents to the liquid, so that no external interference is required to select the appropriate correction factor and/or specific heat.

By forming the average time-of-flight $t_a$ for the upstream and downstream acoustic pulses, the speed of sound is found to be $c = L/t_a$. For known temperature the mixing ratio(s) can now be inferred, provided that an unambiguously relationship between the two sets $\{x_1,..., x_n\}$ and $\{c,T\}$ exists. This enables that the correct values of $K(v, x_1,...,x_n)$ and/or $C(T, x_1,...,x_n)$ can be applied in the flow calculation.

As an example the binary mixture of the commonly used anti-freeze agent Ethylene-Glycol and water is discussed. This is commonly found in domestic and industrial cooling systems. At room temperature the specific heat varies from 4.2 kJ/kg K for pure water to 2.4 kJ/kg K for pure Ethylene-Glycol. Since the specific heat variation can be as much as 40%, it is crucial to know the mixing ratio in order to assess the amount of energy carried by the coolant by means of measuring the temperature difference and volume flow.

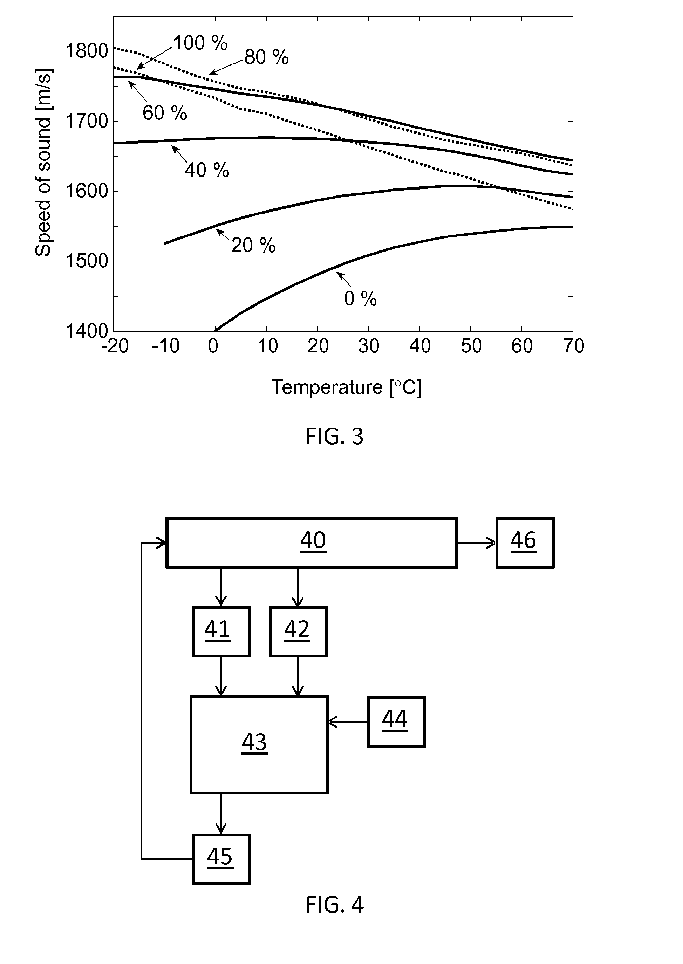

For the water Ethylene-Glycol mixture the speed of sound c and the mixing ratio x are unambiguously related at temperatures ranging from the freezing point up to about 70°C and mixing ratios from 0 to 60 % Ethylene-Glycol. The relationship is plotted in FIGS. 2 and 3.

FIG. 2 shows a 3D plot of the liquid mixture of water and Ethylene-Glycol in terms of the speed of sound, the temperature and the volume fraction of Ethylene-Glycol.

FIG. 3 shows a 2D plane projection of the plot of FIG. 2 in terms of the speed of sound and the temperature. The curves of 80% and 100% cross the other curves, however in real installations, such high volume percentage of the anti-freeze agent would not occur and these curves can safely be disregarded.

FIG. 4 illustrates a flow chart of embodiments of operating an ultrasonic flow meter in accordance with embodiments of the present invention.

In embodiments of the present invention, the functionality of the flow meter may be provided as an additional functionality to the normal operation of a flow meter in order to improve the flow meter. In general, the working principle of an ultrasonic flow meter is known to the skilled person, and will not be elucidated upon in detail here.

In a typical determination of a liquid flow, ultrasonic signals are emitted from the two ultrasonic transducers. Signals propagating upstream propagate faster than signals propagating downstream, and the flow rate can be determined by measuring the difference in arrival time of the emitted signals at the other transducers. The determination of the flow rate, as well as the outputting of the flow rate may be done by an analogue or digital unit electrically connected to the transducers.

In a general step 40, the ultrasonic transducers are operated in a typical manner to determine a difference in arrival time between oppositely propagating ultrasonic signals in order to determine a flow rate 46. As a part of this operation, also the temperature of the liquid is probed 42.

Based on the difference in arrival time the speed of sound of the ultrasonic signals in the liquid is determined 41 and made available, together with the temperature reading 42, to an algorithm 43 implementing an embodiment of the present invention.

The algorithm access or stores the identity 44 of the liquid mixture. This may be stored as a setting in the flow meters electronic.

Based on the inputs, the algorithm 43 accesses a known relationship between a mixing ratio of the flowing liquid, the speed of sound of the liquid and the temperature of the liquid, and determines the mixing ratio 45 of the two or more components of the liquid. The relationship may be stored in any suitable form representing the relationship, such as in a look-up table or as a functional expression.

The mixing ratio is in embodiment inserted into the flow electronic in order to determine flow rate.

The invention can be implemented by means of hardware, software, firmware or any combination of these. The invention or some of the features thereof can also be implemented as software running on two or more data processors and/or digital signal processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. An ultrasonic flow meter unit arranged to measure a flow rate of a known liquid of two or more components, the flow meter unit comprises:

   - at least two ultrasonic transducers arranged for transmission and receipt of ultrasonic signals in opposite directions across a measuring section, the measuring section being arranged to receive the liquid of two of more components;
   - an electronic circuit for operating the flow meter unit, the electronic circuit comprising a processing circuit; and
   - a temperature probe arranged for determining a temperature of the liquid in the measuring section;

   wherein the electronic circuit is operated to determine a speed of sound of the liquid in the measuring section; and
   wherein the processing circuit is capable of accessing a known relationship between a mixing ratio of the two or more components, the speed of sound of the liquid and the temperature of the liquid, and based on the relationship to determine the mixing ratio of the two or more components of the liquid.

2. The flow meter unit according to claim 1 wherein the processing circuit is further capable of determining a measured flow rate of the liquid flowing through the measuring section, and wherein the measured flow rate is determined based on the mixing ratio.

3. The flow meter unit according to any of the preceding claims, wherein the processing circuit is further capable of determining the specific heat capacity of the liquid flowing through the measuring section, and wherein the specific heat capacity is determined based on the mixing ratio.

4. The flow meter unit according to any of the preceding claims, wherein the speed of sound is determined by determining the upstream speed of sound of ultrasonic signals travelling upstream relative to the flowing liquid and the downstream speed of sound of ultrasonic signals travelling downstream relative to the flowing liquid, and wherein the speed of sound is determined as the average speed of the upstream and downstream speeds.

**5.** The flow meter unit according to any of the preceding claims, wherein the known relationship between the mixing ratio of the two or more components, the speed of sound of the liquid and the temperature of the liquid is stored as look-up table.

**6.** The flow meter unit according to any of the preceding claims, wherein the known relationship between the mixing ratio of the two or more components, the speed of sound of the liquid and the temperature of the liquid is stored as a functional expression.

**7.** The flow meter unit according to any of the preceding claims, wherein the known liquid for a specified temperature range and/or specified mixing ratio range exhibit an unambiguous relationship between the mixing ratio of the two or more components, the speed of sound of the liquid and the temperature of the liquid.

**8.** The flow meter unit according to any of the preceding claims, wherein the known liquid is a mixture of water and a functional additive.

**9.** The flow meter unit according to claim 8, wherein the functional additive is selected from the group consisting of: an anti-freeze agent, an anti-corrosion agent, an anti-calcification agent or an anti-friction agent.

**10.** The flow meter unit according to claim 9, wherein the anti-freeze agent is selected from the group consisting of: Ethylene-Glycol, Propylene-Glycol, Glycerol, Methanol, Ethanol, Propanol, Isopropanol, Sodium Chloride, Potassium Chloride and Calcium Chloride.

**11.** The flow meter unit according to claim 9, wherein the anti-corrosion agent is selected from the group consisting of: Sodium Hydroxide and Ammonia.

**12.** The flow meter unit according to claim 9, wherein anti-calcification agent is selected from the group consisting of: Sodium Carbonate, Sodium Sulphates, Sulfonic acid and Alkylbenzene Sulfonic acid.

**13.** The flow meter unit according to claim 9, wherein anti-friction agent is selected from the group consisting of: Tensides, Sulfonic acid and Alkylbenzene Sulfonic acid.

**14.** A flow meter arranged to measure a flow rate of a known liquid of two or more components, the flow meter comprises:

- a housing comprising a flow passage for receiving the flowing liquid, the measuring section being arranged inside the flow passage; and
- an ultrasonic flow meter unit according to any of the claims 1-13 arranged in relation to the housing so as to allow ultrasonic signal to travel between the at least two ultrasonic transducers through the liquid in the measuring section.

**15.** Method of operating an ultrasonic flow meter unit, the flow meter unit comprises:

- at least two ultrasonic transducers arranged for transmission and receipt of ultrasonic signals in opposite directions across a measuring section, the measuring section being arranged to receive the liquid of two of more components ;
- an electronic circuit for operating the flow meter unit, the electronic circuit comprising a processing circuit; and
- a temperature probe arranged for determining a temperature of the liquid in the measuring section;

the method comprises:

- operate the ultrasonic transducers to generate ultrasonic signals propagating through the liquid flow in the measuring section and based on the ultrasonic signals, determine a speed of sound of the liquid in the measuring section;
- determine the temperature of the liquid in the flow passage; and
- access a known relationship between a mixing ratio of the two or more components, the speed of sound of the liquid and the temperature of the liquid, and based on the relationship determine the mixing ratio of the two or more components of the liquid.

FIG. 1

FIG. 2

FIG. 3

FIG. 4

Europäisches
Patentamt

European
Patent Office

Office européen
des brevets

# EUROPEAN SEARCH REPORT

**Application Number**

EP 10 15 7579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 236 406 A (REED PHILIP W ET AL) 2 December 1980 (1980-12-02) * column 1, line 48 - line 59; figure 1 * * column 3, line 48 - column 5, line 63; figures 2,3 * | 1-10, 12-15 | INV. G01F1/66 G01F1/74 |
| A | WO 2004/063741 A2 (CIDRA CORP [US]) 29 July 2004 (2004-07-29) * page 3, line 1 - line 2 * | 3 | |
| X | US 6 194 215 B1 (RAUH WOLFGANG [DE] ET AL) 27 February 2001 (2001-02-27) * column 3, line 11 - column 4, line 67; figure 1 * | 1,9,10 | |
| X | EP 0 233 047 A2 (SCOTTISH & NEWCASTLE BREWERIES [GB]) 19 August 1987 (1987-08-19) * column 3, line 64 - column 4, line 11; figure 1 * | 1,9-13 | |

TECHNICAL FIELDS
SEARCHED (IPC)

G01F

The present search report has been drawn up for all claims

| Place of search | Date of completion of the search | Examiner |
|---|---|---|
| The Hague | 25 August 2010 | Bourhis, J |

EPO FORM 1503 03.82 (P04C01)

EP 2 369 305 A1

**ANNEX TO THE EUROPEAN SEARCH REPORT
ON EUROPEAN PATENT APPLICATION NO.**

EP 10 15 7579

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2010

| Patent document cited in search report | | Publication date | Patent family member(s) | | Publication date |
|---|---|---|---|---|---|
| US 4236406 | A | 02-12-1980 | CA | 1131756 A1 | 14-09-1982 |
| | | | DE | 2964822 D1 | 24-03-1983 |
| | | | EP | 0012160 A1 | 25-06-1980 |
| | | | JP | 55082049 A | 20-06-1980 |
| | | | NO | 793973 A | 12-06-1980 |
| WO 2004063741 | A2 | 29-07-2004 | NONE | | |
| US 6194215 | B1 | 27-02-2001 | AT | 217968 T | 15-06-2002 |
| | | | CN | 1212759 A | 31-03-1999 |
| | | | DE | 19607681 A1 | 04-09-1997 |
| | | | DK | 883805 T3 | 01-07-2002 |
| | | | WO | 9732205 A1 | 04-09-1997 |
| | | | EP | 0883805 A1 | 16-12-1998 |
| | | | JP | 2000505553 T | 09-05-2000 |
| EP 0233047 | A2 | 19-08-1987 | AU | 601393 B2 | 13-09-1990 |
| | | | AU | 6852787 A | 06-08-1987 |
| | | | CA | 1305782 C | 28-07-1992 |
| | | | DK | 58987 A | 05-08-1987 |
| | | | NZ | 219160 A | 26-07-1990 |
| | | | US | 4934177 A | 19-06-1990 |

For more details about this annex : see Official Journal of the European Patent Office, No. 12/82

EPO FORM P0459

10